(19) Europäisches Patentamt
European Patent Office
Office européen des brevets

(11) Publication number: **0 273 551 B1**

# (12) EUROPEAN PATENT SPECIFICATION

(45) Date of publication of patent specification: **22.05.91**

(51) Int. Cl.[5]: **A01N 43/40**, A01N 43/90, //(A01N43/40,25:12), (A01N43/90,25:12)

(21) Application number: **87309382.7**

(22) Date of filing: **23.10.87**

## (54) Formulation process.

(30) Priority: **18.12.86 GB 8630262**

(43) Date of publication of application: **06.07.88 Bulletin 88/27**

(45) Publication of the grant of the patent: **22.05.91 Bulletin 91/21**

(84) Designated Contracting States: **AT BE CH DE ES FR GB GR IT LI LU NL SE**

(56) References cited:
**GB-A- 1 086 937**
**GB-A- 2 100 603**
**US-A- 4 118 218**

**CHEMICAL ABSTRACTS, vol. 80, no. 1, 7th January 1974, abstract no. 809x, Columbus, Ohio, US; & JP-A-73 03 381 (NIHON NOHYAKU CO., LTD) 30-01-1973 (Cat. D)**

(73) Proprietor: **IMPERIAL CHEMICAL INDUSTRIES PLC**
**Imperial Chemical House, Millbank**
**London SW1P 3JF(GB)**

(72) Inventor: **Bull, Alan Frank**
**17 Hermitage Lane**
**Barning Maidstone Kent(GB)**
Inventor: **Knowles, David Alan**
**Perry Cottage Matthews Lane**
**Hadlow Tonbridge Kent(GB)**

(74) Representative: **Downes, John Edward et al**
**Imperial Chemical Industries PLC Legal Department: Patents Po Box 6**
**Welwyn Garden City Herts, AL7 1HD(GB)**

**EP 0 273 551 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to methods of preparing solid herbicidal compositions containing a bipyridylium diquaternary salt as an active ingredient.

Various herbicidal bipyridylium quaternary salts are described in United Kingdom Patent Specifications No. 785,732, 813,531 and 813,532. Certain of these compounds are in widespread use in agriculture, and are manufactured for sale in the form of concentrated aqueous solutions. When required for use, these concentrated solutions are diluted with water to form a solution which is then sprayed upon unwanted plants. For various reasons, it may be preferable for bipyridylium herbicides to be provided in solid form, rather than as aqueous solutions. Thus for example a solid formulation has potential packaging advantages.

Various methods have been proposed for the preparation of solid formulations of herbicidal bipyridylium quaternary salts, but so far none of these formulations has proved suitable for widespread commercial use in agriculture. United Kingdom Patent Specification No. 813,532 for example discloses dust formulations comprising a mixture of a herbicidal bipyridylium quaternary salt with an inert pulverulent diluent, for example, talc, china clay, gypsum, or basic slag. Such formulations are not convenient for applying bipyridylium herbicides in agriculture and have not gained acceptance in commercial use.

United Kingdom Patent Specification No. 1,086,937 discloses a process for the preparation of solid herbicidal compositions in which an aqueous solution of a herbicidal bipyridylium quaternary salt is mixed with a hydrate-forming salt in such proportions that the hydrate-forming salt combines with sufficient of the water present to give a solid composition. The compositions prepared in this way have found acceptance in the retail market for use in domestic gardens. However, they are not suitable for large scale agricultural use. Thus, the proportion of active ingredient is relatively low, and the product does not dissolve sufficiently rapidly. Yet another procedure for preparing solid herbicidal compositions is disclosed in Japanese Patent Publication No. 3381/73. According to this procedure, an aqueous solution of a bipyridylium herbicide is absorbed into pre-formed granules of a water soluble salt. As in the case of the process of UK Specification No. 1,086,937, only formulations of relatively low concentration of active ingredient (i.e. less than 20%) can conveniently be made.

A still further procedure for preparing solid herbicidal compositions containing bipyridylium herbicides is disclosed in United Kingdom Patent Specification No. 1555489. In this procedure, as aqueous solution of a bipyridylium quaternary salt is sprayed into a bed of particles of a solid diluent fluidised in a heated stream of gas, so that the solution of the bipyridylium salt rapidly evaporates and the bipyridylium salt is deposited on the particles of the solid diluent. A disadvantage of this procedure is that the equipment has to be carefully enclosed so as to retain and recycle the "fines" generated in the process, which leads to high capital costs.

Yet another process for preparing solid herbicidal compositions containing bipyridylium herbicides is disclosed in European Patent Application No. 174101. In this procedure an aqueous solution of a bipyridylium salt is mixed with algin, and dried. A disadvantage of this procedure is the relatively high cost of algin, which is obtained from kelp, a variety of seaweed.

According to the present invention there is provided a process of preparing a solid granular herbicidal composition which contains a herbicidal bipyridylium diquaternary salt in association with a diluent comprising an inorganic salt, which comprises mixing a concentrated aqueous solution of the bipyridylium salt with the inorganic salt to give a slurry, drying the slurry, crushing the solid product obtained by drying, and sieving the crushed product to obtain granules of the required size.

The inorganic salt used in the process of the invention is preferably one that is readily soluble in water, so that the product can be rapidly and completely dissolved in water when required for application. The inorganic salt should not be one which forms a strongly alkaline solution (i.e. above pH8-9) in water since this may have a deleterious effect on the bipyridylium salt. Examples of suitable salts include sodium chloride, ammonium chloride, magnesium sulphate, potassium dihydrogen phosphate, magnesium nitrate, sodium acetate, sodium orthophosphate, sodium pyrophosphate, and sodium sulphate, and mixtures of these and other salts. Unlike the salts used in the process described in UK Patent No. 1086937, the salts used in the present invention need not be hydrate-forming salts.

Herbicidal bipyridylium quaternary salts which may be used as the active ingredients of the compositions of the invention include those of the following formulae:

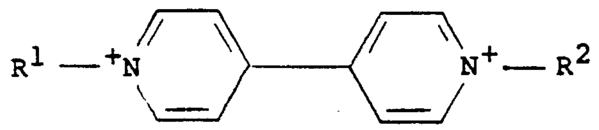 $\frac{2}{n}[X]^{n-}$

and 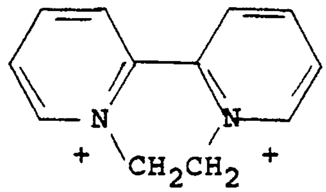 $\frac{2}{n}[X]^{n-}$

wherein $R^1$ and $R^2$, which may be the same or different, each stand for an alkyl or alkenyl radical of 1 to 4 carbon atoms, which may be substituted by a hydroxy, carboxy, alkoxy, alkylcarbonyl, alkoxycarbonyl, carbamoyl, or N-alkyl-substituted carbamoyl radical, or a halogen atom; $[X]^{n-}$ represents an anion and n is 1, 2, 3 or 4. Preferred alkoxy groups are those containing 1 to 4 carbon atoms. Preferred alkylcarbonyl and alkoxycarbonyl groups are those containing from 2 to 5 carbon atoms. Preferred N-alkyl substituted carbamoyl radicals are those in which the N-alkyl substituent or substituents contain from 1 to 4 carbon atoms.

Examples of herbicidal bipyridylium diquaternary salts include those listed below:
1,1'-ethylene-2,2'-bipyridylium dibromide (diquat dibromide)
1,1'-dimethyl-4,4'-bipyridylium dichloride (paraquat dichloride)
1,1'-dimethyl-4,4'-ipyhridylium di(methylsulphate)
1,1'-di-2-hydroxyethyl-4,4'-bipyridylium dichloride
1,1'-bis-3,5-dimethylmorpholinocarbonylmethyl-4,4'-bipyridylium dichloride (morfamquat dichloride)
1-(2-hydroxyethyl)-1'-methyl-4,4'-bipyridylium dichloride
1,1'-di-carbamoylmethyl-4,4'-bipyridylium dichloride
1,1'-bis-N,N-dimethylcarbamoylmethyl-4,4'-bipyridylium dichloride
1,1'-bis-N,N-diethylcarbamoylmethyl-4,4'-bipyridylium dichloride
1,1'-di-(piperidinocarbonylmethyl)-4,4'-bipyridylium dichloride
1,1'-diacetonyl-4,4'-bipyridylium dichloride
1,1'-diethoxycarbonylmethyl-4,4'-bipyridylium dibromide
1,1'-diallyl-4,4'-bipyridylium dibromide

The names in brackets alongside some of the compounds in the above list are the accepted common names for the cationic portion of the compounds. Thus 'paraquat' is the common name for the 1,1'-dimethyl-4,4'-bipyridylium cation. Paraquat is a particularly preferred bipyridylium compound for use in the compositions of the invention.

Since the herbicidal effect of a bipyridylium quaternary cation is independent of the nature of the associated anion, the choice of the anion is a matter of convenience, depending, for example, on cost. Preferably the anion is one which gives rise to a salt of convenient water solubility. Examples of anions, which may be mono-or poly-valent, include acetate, benzenesulphonate, benzoate, bromide, butyrate, chloride, citrate, fluorosilicate, fumarate, fluoroborate, iodide, lactate, malate, maleate, methylsulphate, nitrate, propionate, phosphate, salicylate, succinate, sulphate, thiocyanate, tartrate, and p-toluenesulphonate. The salt of the herbicidal bipyridylium cation may be formed from a number of similar anions or mixtures of different ones. A salt having any particular desired anion may be prepared either by direct synthesis from reactants which include the desired anion, or by exchanging the anion of a previously prepared salt of the preferred anion by methods well known in the art, for example by passage of a solution of the previously prepared salt through an ion-exchange resin. For reasons of convenience and economy, the chloride anion is a particularly preferred anion.

Since the characteristic herbicidal activity of a salt of a herbicidal bipyridylium quaternary cation resides in the cation only, it is customary to quote concentrations of active ingredient and rates of application in terms of the amount of bipyridylium quaternary cation used. Application rates and concentrations quoted in this specification therefore relate to the amount of bipyridylium quaternary cation unless otherwise stated.

In operating the process of the invention, it is preferred to use an aqueous solution containing a high concentration of bipyridylium quaternary cation, for example at least 200 grams per litre. Concentrations as high as 370 grams per litre may conveniently be employed. The product of the process may also contain a

relatively high proportion of the bipyridylium cation used as the active ingredient; for example, concentrations of 20% by weight of bipyridylium cation are readily achieved and higher concentrations for example up to 35% by weight can be conveniently prepared. Preferably the product contains at least 10% by weight of bipyridylium cation.

If desired, further ingredients for example, surface-active agents, may be incorporated into the compositions prepared by the process of the invention.

Preferably, the surface-active agent used is a cationic or non-ionic surface-active agent. The choice of a particular surface-active agent is within the competence of one skilled in the art of pesticide formulation. By way of example, however, non-ionic surface active agents useful in the compositions of the invention include the condensation products of ethylene oxide with fatty alcohols such as oleyl alcohol and cetyl alcohol, or with alkyl phenols such as octylphenol, nonylphenol and octylcresol. Other non-ionic agents are the partial esters derived from long chain fatty acids and hexitol anhydrides, for example sorbitan monolaurate; the condensation products of the said partial esters with ethylene oxide; and the lecithins. Examples of cationic surface active agents include quaternary salts and condensates of ethylene oxide with amines, for example the substances sold under the Trade Marks "Ethomeen" "Ethoduomeen" "Duoquad" and "Arquad". The surface-active agent may be dissolved in the bipyridylium salt solution or may be mixed with the inorganic salt at the same time as the solution of the bipyridylium salt. The amount of surface-active agent used may be for example, from 10 to 20% by weight of the amount of bipyridylium cation in the composition, although larger or smaller amounts may be appropriate depending upon the application intended for the product.

The mixing, drying, crushing, and sieving steps in the process of the invention may be carried out by conventional procedures. Thus for example the drying step may be carried out by means of a drum dryer. In this procedure the slurry formed by mixing the salt with the bipyridylium salt solution is fed on to the surface of a revolving drum heated by steam to 100°C or above. The slurry is carried around on the revolving drum to a point where it is scraped off by a doctor blade. The dried product so obtained is then crushed, for example between rollers, and sieved to obtain granules of the desired size. Preferably the granules are between 0.5 and 2.0 millimetres in diameter.

The drying step may also be carried out using a heated conveyor belt. The accompanying drawing illustrates diagrammatically the use of a heated conveyor belt to carry out the drying step. In the drawing, the slurry (1) of inorganic salt and bipyridylium salt solution is agitated in a tank (2) by means of a mixer (3). The tank is enclosed in an insulated box (4) provided with a hot air inlet (5). The slurry (1) is pumped from the tank (2) by means of the pump (6) through the pipe (7) on to the conveyor belt (8) and spread evenly by the spreader bar (9). The conveyor belt is preferably made of, or coated with, a material resistant to corrosion, for example polytetrafluoroethylene. The conveyor belt is heated by the plate (10), which itself may be for example electrically heated. The conveyor belt is mostly within an enclosure (11) to reduce loss of heat. A blade (12) is mounted at the end of the conveyor belt to scrape off dried slurry. A brush (13) is mounted at the underside of the conveyor belt to clean off any adhering material. A receptacle (14) is provided to receive the dried slurry (15). The whole assembly is enclosed within a cubicle (16) to contain any fine dust produced in the process. In order to prevent dust escaping from the cubicle, air is withdrawn from the cubicle through the pipe (17) so as to maintain a slightly lower pressure inside the cubicle relative to the outside. The air exhausted from the cubicle through pipe (17) is passed through filters to collect any dust. The dried slurry obtained in this way is then crushed and sieved as before to obtain granules of the desired size.

The granules obtained by the process of the invention are essentially non-dusty and free crystals of the bipyridylium diquaternary salts are not observable. The granules dissolve readily in water to give a clear solution, in most cases in less than one minute. The granules made by the process of UK Patent 1086937 are generally rather slower to dissolve, solution taking of the order of 2 minutes.

## EXAMPLE 1

This Example illustrates the preparation of solid herbicidal compositions by the process of the invention.

A concentrated aqueous solution of paraquat dichloride ("paraquat dichloride concentrate") is agitated with a mixer of the Silverson type while the inorganic salt is added to form a slurry. The inorganic salt is ground before use (except in the case of magnesium sulphate). If desired, the viscosity of the slurry can be lowered by adding more water. The slurry so obtained is then dried on a drum dryer or a heated conveyor belt at a temperature of 120-180°C. The dried flakes of the material are then crushed by rollers and sieved through a mechanical sieve with take-off facilities. The material having a particle size range of 0.5 to 2mm is

collected as the product. Examples of compositions produced by this process are given below:

Composition 1

| Component | Amount (g) |
|---|---|
| Paraquat dichloride concentrate | 200 grams as ion$^+$ |
| Ammonium chloride | 618 |
| Synperonic NP8 (wetter) | 24 |
| Synprolam 35 X-15 | 82 |

to give 1 Kilogram dried product.

$^+$276 g as dichloride.

Composition 2

| Component | Amount (g) |
|---|---|
| Paraquat dichloride concentrate to give | 200 grams as ion |
| Ammonium chloride | 309 |
| Dried magnesium sulphate | 309 |
| Synperonic NP8 | 24 |
| Synprolam 35 X-15 | 82 |

Composition 3

| Component | Amount (g) |
|---|---|
| Paraquat dichloride concentrate to give | 200 grams as ion |
| Ammonium chloride | 309 |
| Sodium chloride | 309 |
| Synperonic NP8 | 24 |
| Synprolam 35 X-15 | 82 |

Synperonic NP8 is a Trade Mark for a surfactant comprising a condensate of 7 to 8 molar proportions of ethylene oxide with p-nonyl phenol.

Synprolam 35 X-15 is a Trade Mark for a surfactant comprising a tertiary amine obtained by condensing soyabean amine with 15 molar proportions of ethylene oxide.

## Claims

1. A process of preparing a solid granular herbicidal composition which contains a herbicidal bipyridylium diquaternary salt in association with a diluent comprising an inorganic salt, which comprises mixing a concentrated aqueous solution of the bipyridylium salt with the inorganic salt to give a slurry, drying the slurry, crushing the solid product obtained by drying, and sieving the crushed product to obtain granules of the required size.

2. A process as claimed in claim 1 wherein the bipyridylium diquaternary salt has the formula:

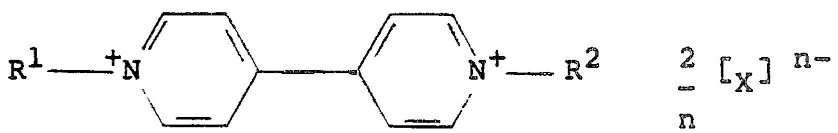

and

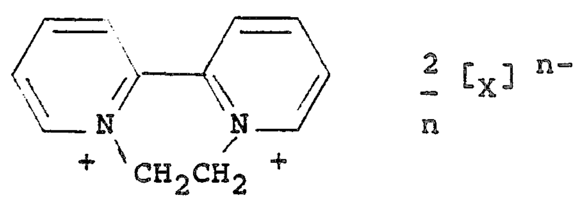

wherein $R^1$ and $R^2$, which may be the same or different, each stand for an alkyl or alkenyl radical of 1 to 4 carbon atoms, which may be substituted by a hydroxy, carboxy, alkoxy, alkylcarbonyl, alkoxycarbonyl, carbamoyl, or N-alkyl-substituted carbamoyl radical, or a halogen atom; $[X]^{n-}$ represents an anion, and n is 1, 2, 3, or 4.

3. A process as claimed in claim 1 or claim 2 wherein the bipyridylium diquaternary salt is paraquat dichloride.

4. A process as claimed in claims 1 to 3 wherein a surface-active agent is incorporated into the solid formulation.

5. A process as claimed in any of claims 1 to 4 wherein the solution of the bipyridylium quaternary salt contain at least 200 grams per litre of the bipyridylium diquaternary cation.

## Revendications

1. Procédé de préparation d'une composition herbicide granulaire solide qui contient un sel diquaternaire de bipyridylium herbicide en association avec un diluant comprenant un sel inorganique, qui consiste à mélanger une solution aqueuse concentrée du sel de bipyridylium avec le sel inorganique pour former une suspension, à sécher la suspension, à broyer le produit solide obtenu par séchage et à tamiser le produit broyé pour obtenir des granules du diamètre désiré.

2. Procédé suivant la revendication 1, dans lequel le sel diquaternaire de bipyridylium répond à la formule ;

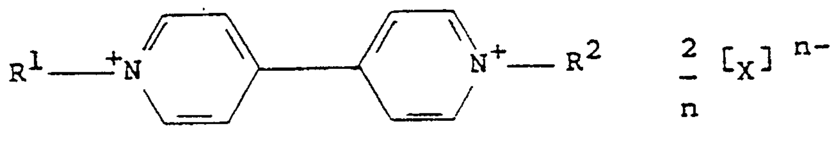

et

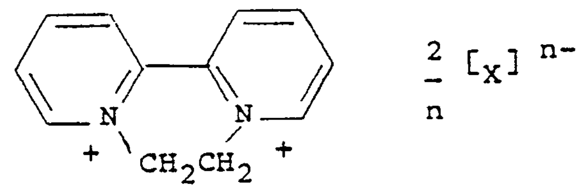

dans laquelle $R^1$ et $R^2$, qui peuvent être identiques ou différents, représentent chacun un radical alkyle ou alcényle ayant 1 à 4 atomes de carbone, qui peut être substitué par un radical hydroxy, carboxy, alkoxy, alkycarbonyle, alkoxycarbonyle, carbamoyle, ou carbamoyle à substituant alkyle sur l'azote, ou un atome d'halogène ; $[X]^{n-}$ représente un anion et n a la valeur 1, 2, 3 our 4.

3. Procédé suivant la revendication 1 ou la revendication 2, dans lequel le sel diquaternaire de bipyridylium est le paraquat dichlorure.

4. Procédé suivant les revendications 1 à 3, dans lequel un agent tensioactif est incorporé dans la formulation solide.

5. Procédé suivant l'une quelconque des revendications 1 à 4, dans lequel la solution du sel quaternaire de bipyridylium contient au moins 200 grammes par litre du cation diquaternaire bipyridylium.

## Ansprüche

1. Verfahren zur Herstellung einer festen, granularen Herbicidzusammensetzung, welche ein herbicides diquaternäres Bipyridyliumsalz zusammen mit einem Verdünnungsmittel aus einem anorganischen Salz enthält, bei welchem eine konzentrierte wäßrige Lösung des Bipyridyliumsalzes mit dem anorganischen Salz gemischt wird, um eine Aufschlämmung zu bilden, die Aufschlämmung getrocknet wird, das durch Trocknen erhaltene feste Produkt zerkleinert wird und das zerkleinerte Produkt gesiebt wird, um Granalien der gewünschten Größe zu erhalten.

2. Verfahren nach Anspruch 1, bei welchem das diquaternäre Bipyridyliumsalz die Formel

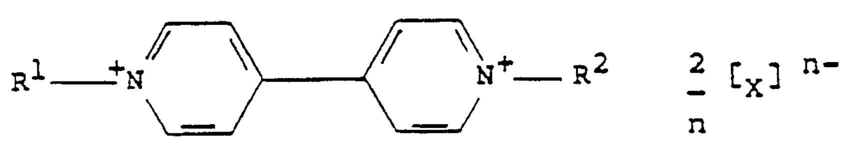

oder

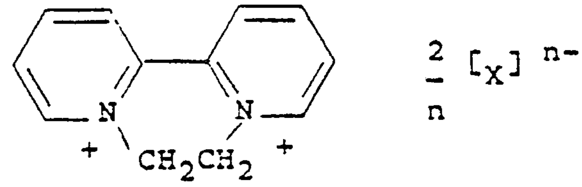

aufweist, worin $R^1$ und $R^2$, welche gleich oder verschieden sein können, jeweils für ein Alkyl- oder Alkenylradikal mit 1 bis 4 Kohlenstoffatomen stehen, welches durch ein Hydroxy-, Carboxy-, Alkoxy-, Alkylcarbonyl-, Alkoxycarbonyl-, Carbamoyl- oder N-alkylsubstituiertes Carbamoylradikal oder ein Halogenatom substituiert sein kann, $[X]^{n-}$ für ein Anion steht und n für 1, 2, 3 oder 4 steht.

**3.** Verfahren nach Anspruch 1 oder 2, bei welchem das diquaternäre Bipyridyliumsalz aus Paraquatdichlorid besteht.

**4.** Verfahren nach einem der Ansprüche 1 bis 3, bei welchem ein oberflächenaktives Mittel in die feste Formulierung einverleibt wird.

**5.** Verfahren nach einem der Ansprüche 1 bis 4, bei welchem die Lösung des quaternären Bipyridyliumsalzes mindestens 200 g/l von dem diquaternären Bipyridyliumkation enthält.

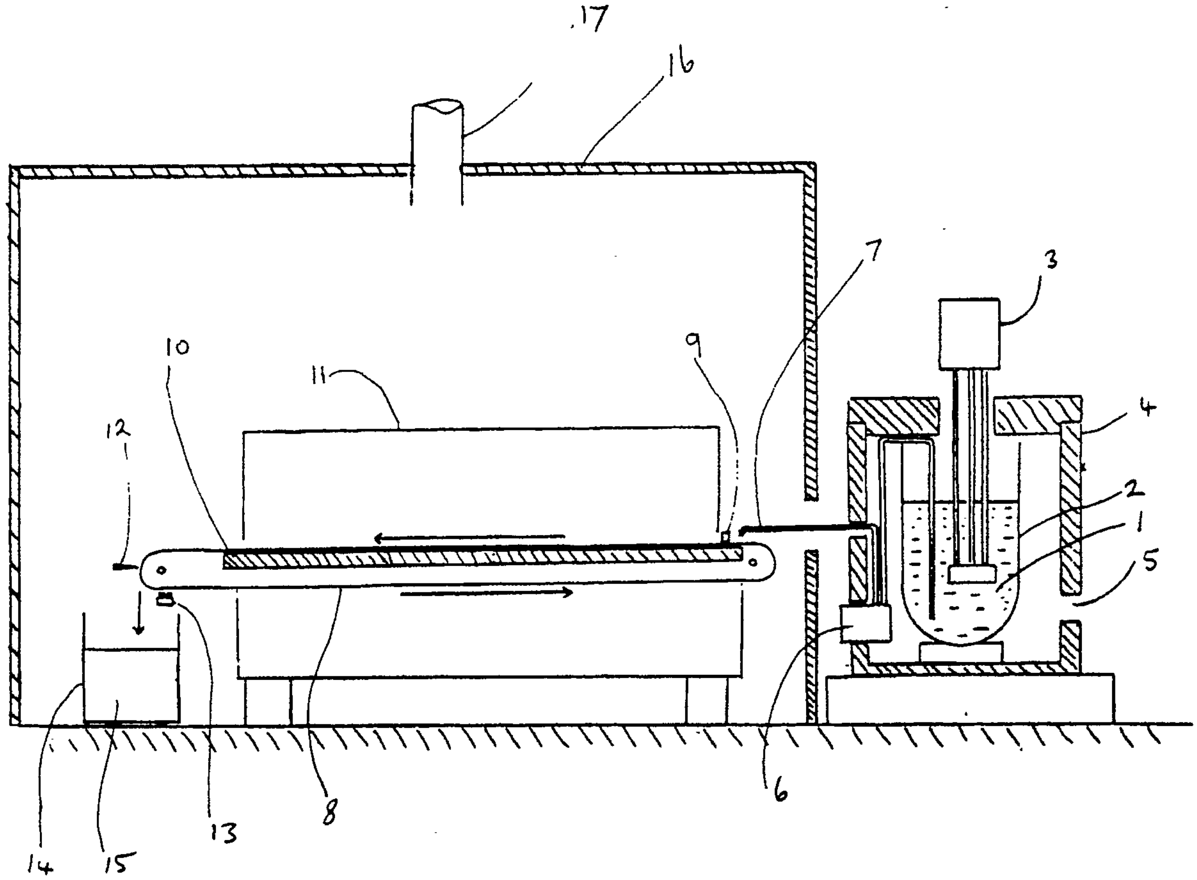
17
16
7
3
10
9
11
4
12
2
1
5
6
8
13
14
15